Europäisches Patentamt

European Patent Office

Office européen des brevets

(11) Veröffentlichungsnummer: **0 367 099**
**A2**

## EUROPÄISCHE PATENTANMELDUNG

(21) Anmeldenummer: 89119873.1

(51) Int. Cl.5: **F04B 13/00 , F04B 9/04 , G01N 30/32**

(22) Anmeldetag: 26.10.89

(30) Priorität: 03.11.88 DE 3837325

(43) Veröffentlichungstag der Anmeldung:
09.05.90 Patentblatt 90/19

(84) Benannte Vertragsstaaten:
CH FR GB IT LI NL

(71) Anmelder: **Bruker-Franzen Analytik GmbH**
**Kattenturmer Heerstrasse 122**
**D-2800 Bremen 61(DE)**

(72) Erfinder: **Risler, Wolfgang, Dr.**
**Im Ring 2**
**D-2803 Weyhe(DE)**
Erfinder: **Nagel, Uwe**
**Marsseler Strasse 7**
**D-2863 Ritterhude(DE)**

(74) Vertreter: **Patentanwälte Kohler - Schwindling**
**- Späth**
**Hohentwielstrasse 41**
**D-7000 Stuttgart 1(DE)**

(54) **Flüssigkeits-Kolbenpumpe für chromatographische Analysegeräte.**

(57) Eine Flüssigkeits-Kolbenpumpe zum Erzeugen eines Flüssigkeitsstromes für chromatographische Analysengeräte weist einen Hauptzylinder (1) mit Einlaß- und Auslaßventil (11, 12) und einem von einem kreisförmigen ersten Exzenter (14) angetriebenen Kolben (13) auf, zu dem förderseitig ein ventilloser Hilfszylinder (2) mit einem von einem zweiten Exzenter (24) angetriebener zweiter Kolben (23) in Serie geschaltet ist, dessen Hubvolumen halb so groß ist wie das Hubvolumen des ersten Kolbens (13) und dessen Arbeitstakt gegenüber dem Arbeitstakt des ersten Kolbens (13) um 180° phasenverschoben ist. Der zweite Exzenter (24) hat eine von von der Kreisform abweichende Kontur, derart, daß der Saughub des zweiten Kolbens (23) sich über einen Drehwinkel des zweiten Exzenters (23) von weniger als 180° erstreckt und weiterhin die Förderleistung des Hilfszylinders (2) während des Saughubes des Hauptzylinders (1) wenigstens annähernd konstant ist, so daß auch die Gesamt-Förderleistung der Pumpe im wesentlichen zeitlich konstant ist.

Fig.1

EP 0 367 099 A2

## Flussigkeits-Kolbenpumpe für chromatographische Analysegeräte

Die Erfindung betrifft eine Flussigkeits-Kolbenpumpe zum Erzeugen eines Flussigkeitsstromes für chromatographische Analysengeräte mit einem Hauptzylinder, der ein Einlaß- und ein Auslaßventil und einen von einem ersten Exzenter angetriebenen ersten Kolben aufweist, mit einen förderseitig zum Hauptzylinder in Reihe geschalteten, ventillosen Hilfszylinder, der einen von einem zweiten Exzenter angetriebenen zweiten Kolben aufweist, dessen Hubvolumen halb so groß ist wie das Hubvolumen des ersten Kolbens und dessen Arbeitstakt gegenüber dem Arbeitstakt des ersten Kolbens um 180° phasenverschoben ist, so daß der Hilfszylinder während der Förderphase des Hauptzylinders einen Teil der geförderten Flüssigkeit aufnimmt und während der Saugphase des Hauptzylinders den aufgenommenen Teil der Flüssigkeit wieder abgibt und dadurch der Pulsation des geförderten Flüssigkeitsstromes entgegenwirkt, und mit einer gemeinsamen Antriebsvorrichtung für die beiden Exzenter.

Solche Flüssigkeits-Kolbenpumpen sind unter der Bezeichnung "1 1/2 köpfige Kolbenpumpe" bekannt und im Handel. Bei den zum Antrieb der Kolben dienenden Exzentern handelt es sich um Kreisscheiben, die auf der gleichen Welle exzentrisch und um 180° gegeneinander versetzt befestigt sind. Der Förderverlauf dieser Flüssigkeits-Kolbenpumpen ist zwar insoweit kontinuierlich, als während der Saugphase des Hauptzylinders wegen der Abgabe des während der Förderphase des Hauptzylinders von dem Hilfszylinder aufgenommenen Anteiles der geforderten Flüssigkeit keine Unterbrechung der Förderung eintritt, jedoch geht die Förderleistung der Kolbenpumpe am oberen und am unteren Totpunkt des ersten Kolbens jeweils auf null zurück. Diese noch immer starke Variation der Förderleistung ist in vielen Fällen nicht tolerierbar.

Es ist zwar aus der DE-PS 30 35 770 eine Flüssigkeits-Kolbenpumpe bekannt, die einen im wesentlichen konstanten Flüssigkeitsstrom erzeugt, jedoch handelt es sich hierbei um eine Pumpe mit mindestens drei Kolben-Zylinder-Einheiten, deren Zylinder alle mit Einlaß- und Auslaßventilen ausgestattet sind, die mit gleicher gegenseitiger Phasenverschiebung betrieben werden und bei der ein spezielles Regelsystem dafür sorgt, daß der Druck der geförderten Flüssigkeit während jeder Periode der Kolbenbewegung wenigstens annähernd konstant gehalten wird, was als Zeichen für eine konstante Förderleistung bewertet wird. Eine solche Mehrfach-Kolbenpumpe ist für einfachere Analysengeräte zu aufwendig.

Demgemäß liegt der Erfindung die Aufgabe zugrunde, eine Flüssigkeits-Kolbenpumpe zum Erzeugen eines Flüssigkeitsstromes für chromatographische Analysengeräte zu schaffen, deren Aufbau nicht wesentlich komplizierter ist als derjenige einer 1 1/2-köpfigen Kolbenpumpe und bei der nur noch eine geringe Pulsation des geförderten Flüssigkeitsstromes vorhanden ist.

Diese Aufgabe wird nach der Erfindung dadurch gelöst, daß bei kreisförmiger Kontur des ersten Exzenters der zweite Exzenter eine von der Kreisform abweichende Kontur aufweist, derart, daß der Saughub des zweiten Kolbens sich über einen Drehwinkel des zweiten Exzenters von weniger als 180° erstreckt und infolgedessen der Hilfszylinder auch während des Förderhubes des ersten Kolbens Flüssigkeit abgibt, wenn die Förderleistung des Hauptzylinders wegen der Annäherung des ersten Kolbens an seine Totpunkte schon erheblich vermindert ist, und daß die Förderleistung des Hilfszylinders während des Saughubes des Hauptzylinders wenigstens annähernd konstant ist.

Da bei der erfindungsgemäßen Kolbenpumpe der Hilfszylinder schon mit dem Fördern von Flüssigkeit beginnt, bevor der Hauptzylinder seine Totpunkte erreicht, bzw. das Fördern von Flüssigkeit noch fortsetzt, nachdem schon der Hauptzylinder die Förderung begonnen hat, hat der resultierende Förderverlauf keine Null-Stellen mehr und es lassen sich durch die Formgebung des zweiten Exzenters Schwankungen der Förderleistung weitgehend eliminieren.

Theoretisch läßt sich eine völlig konstante Föderung dadurch erreichen, daß die Kontur des zweiten Exzenters so bestimmt wird, daß die Summe der Förderleistungen von Hauptzylinder und Hilfszylinder über eine vollständige Arbeitsperiode der beiden Zylinder, also eine vollständige Umdrehung der Exzenter, konstant ist. Dies ist dann der Fall, wenn die Kontur des zweiten Exzenters durch die folgenden Beziehungen bestimmt ist:

$$r_K = E\left(\frac{\beta}{\pi} + \cos\beta\right) - \sqrt{R_H^2 - E^2\sin^2\beta} + r_1 \text{ für } 0 \leq \beta \leq 180° \text{ und}$$

$$r_k = E\left(\frac{\beta}{\pi} - 1\right) - R_H + r_1 \text{ für } 180° \leq \beta \leq 360°,$$

mit

$r_1$ = Radius des ersten Exzenters (14),

$r_2$ = Radius einer am ersten Exzenter (14) anliegenden, am Ende des ersten Kolbens (13) gelagerten Rolle (15),

$R_H = r_1 + r_2$,

$E$ = Abstand des Drehpunktes ($P_2$) des ersten Exzenters (14) vom Kreismittelpunkt ($P_1$),

$\beta$ = Winkel zwischen der den Drehpunkt ($P_2$) des ersten Exzenters (14) mit dem Mittelpunkt ($P_3$) der am

2

Exzenter (14) anliegenden Rolle (15) verbindenden Linie ($r_h$) und dem den Mittelpunkt ($P_1$) dieses Exzenters (14) mit dessen Drehpunkt ($P_2$) verbindenden Radius (16) und

$r_k$ = Abstand des Mittelpunktes einer am zweiten Exzenter (24) anliegenden, am Ende des zweiten Kolbens (23) gelagerten Rolle (25) vom Drehpunkt des zweiten Exzenters (24).

Der zweite Exzenter kann anhand der vorstehend wiedergegebenen Beziehung in einfacher Weise dadurch hergestellt werden, daß die Werte $r_k$ für Intervalle des Winkels ß von jeweils 0,5° berechnet werden und die erhaltenen Werte in eine numerisch gesteuerte Fräsmaschine eingegeben werden. Bei Verwendung eines Fräsers, dessen Radius mit dem Radius der am Ende des zweiten Kolbens gelagerten Rolle übereinstimmt, erhält man einen Exzenter mit der für den zweiten Exzenter gewünschten Kontur.

Es ist ersichtlich, daß durch die Erfindung eine Kolbenpumpe mit sehr einfachem Aufbau geschaffen wird, die einfach herstellbar ist und deren Förderleistung eine für viele Zwecke ausreichende Konstanz hat. Dabei ist von besonderem Vorteil, daß zum Antrieb des Hauptzylinders ein einfacher, von einer Kreisscheibe gebildeter Exzenter verwendet werden kann, der mit großer Präzision herstellbar ist, so daß die durch diesen Exzenter bestimmte mittlere Förderleistung mit sehr hoher Präzision bestimmt werden kann. Die Kontur des zweiten Exzenters beeinflußt zwar die Konstanz der Förderleistung, nicht aber die Größe der mittleren Förderleistung oder das Fördervolumen pro Hub, so daß sich geringe Fehler bei der Herstellung des zweiten Exzenters nicht gravierend auswirken.

Ein besonderer Vorteil der erfindungsgemäßen Kolbenpumpe besteht darin, daß auf die gleiche Weise wie die konstante Förderleistung auch ein pulsationsfreies Ansaugverhalten erzielt werden kann, indem in weiterer Ausgestaltung der Erfindung zu den Hauptzylindern auch saugseitig ein ventilloser Hilfszylinder in Reihe geschaltet wird, der einen von einem dritten Exzenter angetriebenen dritten Kolben aufweist, welcher dritte Exzenter sich aus dem zweiten Exzenter durch eine Drehung um 180° und Spiegelung ergibt.

Es ist ohne weiteres einzusehen, daß der saugseitig angeordnete Hilfszylinder so betrieben werden muß, daß er während der Förderphase des Hauptzylinders die zu fördernde Flüssigkeit ansaugt und während der Saugphase des Hauptzylinders die aufgenommenen Flüssigkeit abgibt, so daß der Hauptzylinder einen Teil der Flüssigkeit aus einem Vorratsgefäß od.dgl. und zum Teil dem zweiten Hilfszylinder entnimmt.

Ein pulsationsfreies Ansaugverhalten einer Kolbenpumpe für die Flüssigkeits-Chromatographie ist dann erforderlich, wenn zeitlich programmierbar Lösungsmittel mit wechselnden Zusammensetzungen gefördert werden müssen. Eine Technik der Mischung von Lösungsmitteln besteht darin, der Kolbenpumpe die zu fördernde Flüssigkeit aus verschiedenen Vorratsgefäßen zeitgesteuert zuzuführen. Die Verwendung einer Pumpe mit kontinuierlichem Ansaugverhalten gewährleistet dann eine lineare Beziehung zwischen Zeitdauer der Förderung und der geförderten Menge der jeweiligen Komponente.

Wird ein sehr hoher Grad an Förderkonstanz erwünscht, gegebenenfalls auch noch unter Berücksichtigung des herrschenden Druckes und der Kompressiblität der Flüssigkeiten, so kann auch die erfindungsgemäße Kolbenpumpe mit einer Regeleinrichtung kombiniert werden, die eine solche Variation der Drehzahl der Exzenter während jeder ihrer Umdrehungen bewirkt, daß der Druck der geförderten Flüssigkeit während jeder Umdrehung wenigstens annähernd konstant bleibt, und es können auch druckunabhänige Mittel zum Oberwachen und Konstanthalten der mittleren Drehzahl der Exzenter vorgesehen sein. Insofern lassen sich alle diejenigen Einrichtungen anwenden, die aus der oben erwähnten DE-PS 30 35 770 bekannt sind, wobei einsichtig ist, daß die dazu notwendigen Sensoren druckseitig hinter dem Hilfszylinder angebracht werden müssen.

Die Erfindung wird im folgenden anhand des in der Zeichnung dargestellten Ausführungsbeispieles näher beschrieben und erläutert. Die der Beschreibung und der Zeichnung zu entnehmenden Merkmale können bei anderen Ausführungsformen der Erfindung einzeln für sich oder zu mehreren in beliebiger Kombination Anwendung finden. Es zeigen

Fig. 1 die schematische Darstellung einer Flüssigkeits-Kolbenpumpe nach der Erfindung,

Fig. 2 ein Diagramm zur Erläuterung der bei der Berechnung des zweiten Exzenters der Kolbenpumpe nach Fig. 1 verwendeten Größen,

Fig. 3 ein Diagramm, das den Förderverlauf der beiden Zylinder der Flüssigkeits-Kolbenpumpe nach Fig. 1 wiedergibt, und

Fig. 4 die schematische Darstellung einer weiteren Ausführungsform der Erfindung.

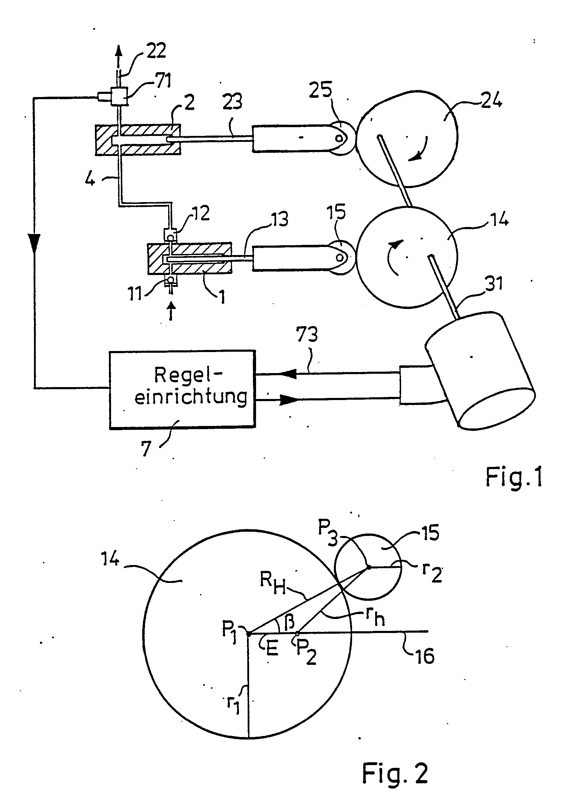

Die in Fig. 1 dargestellte Flüssigkeits-Kolbenpumpe weist zwei Zylinder auf, nämlich einen Hauptzylinder 1 und einen Hilfszylinder 2. Der Hauptzylinder 1 ist mit einem Einlaßventil 11 und einem Auslaßventil 12 versehen. Der Kolben 13 des Hauptzylinders 1 wird von einem kreisförmigen Exzenter 14 angetrie ben, der auf der Abtriebswelle 31 eines Antriebsmotors 3 befestigt ist. Der Hilfszylinder 2 ist über eine Leitung 4 mit dem Auslaß des Hauptzylinders 1 verbunden und demgemäß förderseitig zu dem Hauptzylinder 1 in Reihe geschaltet. Dieser Hilfszylinder 2 weist keine Einlaß- und Auslaßventile auf und hat ein Hubvolumen, das nur halb so groß ist wie das Hubvolumen des Hauptzylinders 1. Der Kolben 23 des Hilfszylinders 2 wird ebenfalls von einem Exzenter 24 angetrieben, der auf der gleichen Abtriebswelle 31 des Antriebsmotors 3 befestigt ist wie der erste Exzenter 14, der den Kolben 13 des Hauptzylinders 1 antreibt. Der den Kolben 23 des Hilfszylinders 2 antreibende Exzenter 24 ist auf der Welle 31 in Bezug auf den ersten Exzenter 14 so angeordnet, daß seine Exzentrizität zu derjenigen des ersten Exzenters 14 entgegengesetzt ist. Daher sind die Arbeitstakte der beiden Kolben um 180° gegeneinander phasenverschoben. Da also der Kolben 23 des Hilfszylinders 2 seinen Saughub ausführt, während der Kolben 13 des Hauptzylinders 1 seinen Förderhub ausführt, und der Hilfszylinder 2 das halbe Hubvolumen hat wie der Hauptzylinder 1, nimmt der Hilfszylinder 2 während der Förderphase des Hauptzylinders die Hälfte der von dem Hauptzylinder geförderten Flüssigkeit auf und gibt diese Flüssigkeit während der Saugphase des Hauptzylinders wieder ab. Daher wird am Auslaß 22 des Hilfszylinders 2 ein im wesentlichen kontinuierlicher Flüssigkeitsstrom erzielt. Dabei hat der den Kolben 23 des Hilfszylinders 2 antreibende zweite Exzenter 24 eine solche von der Kreisform abweichende Form, daß der Flüssigkeitsstrom nicht nur kontinuierlich, sondern im wesentlichen konstant ist.

Ist, wie in Fig. 2 dargestellt,

$P_1$ der Mittelpunkt des kreisförmigen Exzenters 14,

$r_1$ der Radius des kreisförmigen Exzenters 14,

$P_2$ der Drehpunkt des kreisförmigen Exzenters 14,

E die Exzentrizität (Abstand $P_1 P_2$),

$P_3$ der Drehpunkt einer am Umfang des Exzenters 14 anliegenden, am Ende des Kolbens 13 des Hauptzylinders 1 drehbar gelagerten Rolle 15,

$r_2$ der Radius der Rolle 15,

$R_H$ der Abstand des Rollenmittelpunktes $P_3$ vom Mittelpunkt $P_1$ des Exzenters 14,

$r_h$ der Abstand des Rollenmittelpunktes $P_3$ vom Drehpunkt $P_2$ des Exzenters 14 und

$\beta$ der Winkel zwischen $r_h$ und dem den Mittelpunkt $P_1$ und den Drehpunkt $P_2$ verbindenden Radius 16,

so erhält man durch Anwenden des Cosinus-Satzes

$$r_H = \sqrt{R_H^2 - E^2 \sin^2 \beta} - E \cos\beta \qquad (1)$$

Da $r_H$ den Abstand des Mittelpunktes $P_3$ der Rolle 15 von dem Drehpunkt $P_2$ des Exzenters 14 angibt, gibt $r_H$ auch die Stellung des ersten Kolbens 13 im Hauptzylinder 1 an. Die erste Ableitung dieser Stellung nach $\beta$ stellt dann den Förderverlauf des Hauptzylinders während der Förderphase dar, das heißt im Intervall $0 \leq \beta \leq \Pi$. Während der Saugphase, das heißt im Winkelbereich $\Pi \leq \beta \leq \Pi$ ist die Förderleistung 0, weil dann das Auslaßventil 12 schließt. Demgemäß wird der Förderverlauf des Hauptkolbens während der Förderphase durch die folgende Gleichung (2) wiedergegeben:

$$v_H = E \sin\beta \left[ 1 - \frac{E \cos\beta}{\sqrt{R_H^2 - E^2 \sin^2\beta}} \right] . \qquad (2)$$

Ein zeitlich konstanter Förderverlauf wird dann erzielt, wenn der zum Förderverlauf des Hauptzylinders addierte Förderverlauf des Hilfszylinders einen konstanten Wert ergibt, der gleich dem Mittelwert der vom Hauptzylinder pro Umdrehung geförderten Flüssigkeitsmenge ist. Die Fördermenge ist dem Hub des Kolbens 13 des Hauptzylinders 1 proportional. Dieser Hub beträgt 2E, so daß der Mittelwert sich zu $2E/2\Pi = E/\Pi$ ergibt. Wird der Förderverlauf des Hauptzylinders von diesem Mittelwert abgezogen, so ergibt sich der für den Hilfszylinder 2 erwünschte Förderverlauf $v_k$, nämlich

$$v_K = A E \left[ \frac{1}{\Pi} - \sin\beta \left( 1 - \frac{E \cos\beta}{\sqrt{R_H^2 - E^2 \sin^2\beta}} \right) \right] \qquad 0 \leq \beta \leq \Pi$$

$$v_K = \frac{A E}{\Pi} \qquad \Pi \leq \beta \leq 2\Pi \qquad (3)$$

Durch Integration erhält man analog zu $r_H$ den Abstand $r_K$, den der Mittelpunkt einer am Umfang des zweiten Exzenters 24 anliegenden, am Ende des Kolbens 23 des Hilfszylinders 2 gelagerte Rolle 25 zum Drehpunkt des zweiten Exzenters 24 haben muß. Die Integration ergibt

$$r_k = E \left( \frac{\beta}{\pi} + \cos \beta \right) - \sqrt{R_H{}^2 - E^2 \sin^2 \beta} + r_1 \qquad 0 \leq \beta \leq \pi$$

$$r_k = E \left( \frac{\beta}{\pi} - 1 \right) - R_H + r_1 \qquad \pi \leq \beta \leq 2\pi \qquad (4)$$

In Gl. 4 bedeutet $r_1$ eine Konstante, welche die Größe des zweiten Exzenters 24 bestimmt und die zweckmäßig so gewählt wird, daß die oberen Totpunkte der beiden Kolben den gleichen Wert haben. Weiterhin ist zu erwähnen, daß für beide Zylinder der gleiche Querschnitt angenommen wurde, der zur Vereinfachung gleich 1 gesetzt wurde. Der zweite Exzenter 24 läßt sich nach Gl. 4 in einfacher Weise dadurch herstellen, daß $r_k$ für gleiche Intervalle von ß, beispielsweise für Intervalle von 0,5°, ausgerechnet wird und die errechneten Werte an eine NC-gesteuerte Fräsmaschine übertragen werden. Bei Verwendung eines Fräsers, dessen Radius mit dem Radius der am zweiten Exzenter 24 anliegenden Rolle 25 übereinstimmt, wird die gewünschte Kontur des Exzenters 24 erhalten.

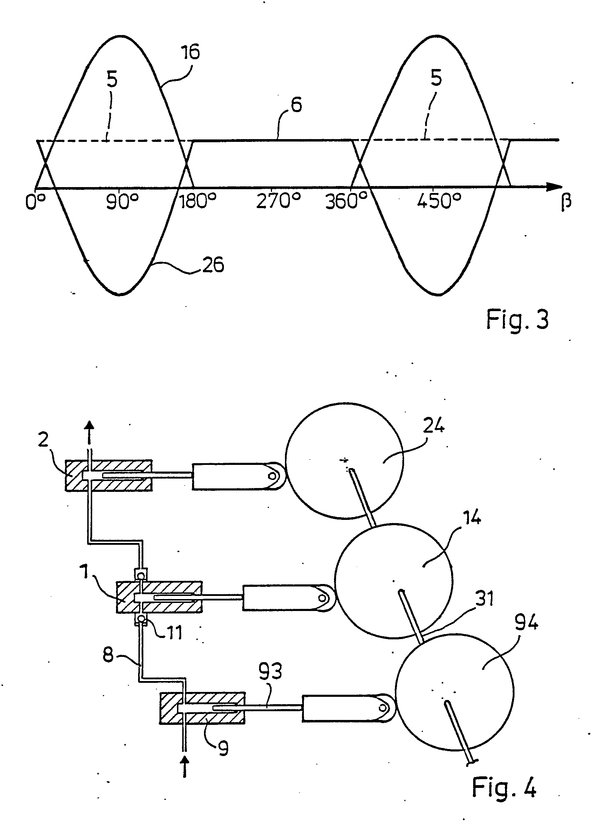

Der resultierende Förderverlauf ist in Fig. 3 wiedergegeben. Die Kurve 16 veranschaulicht den Förderverlauf des Hauptzylinders 1 und die Kurve 26 den Förderverlauf des Hilfszylinders 2. Es ist bemerkenswert, daß die Saugphase des Hilfszylinders sich über einen kleineren Winkel als 180° erstreckt, so daß der Hilfszylinder bereits mit der Förderung einsetzt, bevor die Förderphase des Hauptzylinders beendet ist, und entsprechend seine Förderphase auch noch fortsetzt, nachdem der Hauptzylinder seine Förderphase schon begonnen hat. Auf diese Weise addieren sich die Förderverhalten von Hauptzylinder und Hilfszylinder zu einem konstanten Mittelwert, der in Fig. 3 durch die gestrichelten Linie 5 wiedergegeben ist. Im Bereich zwischen 180° und 360° hat der Hilfszylinder den durch die Linie 6 wiedergegebenen konstanten Förderverlauf. Demgemäß hat die in Fig. 1 wiedergegebene Flüssigkeits-Kolbenpumpe ein konstantes Förderverhalten. Dabei ist von besonderem Vorteil, daß der Hauptzylinder durch einen kreisförmign Exzenter angetrieben wird, dessen Größe und Exzentrizität sehr genau bestimmbar sind, so daß auch die mittlere Förderleistung der Kolbenpumpe genau festgelegt ist.

Der durch Fig. 3 wiedergegebene, theoretisch völlig konstante Förderverlauf ist allerdings in der Praxis nicht ohne weiteres zu erreichen, weil die Kompressibilität der zu fördernden Flüssigkeit und die Trägheit der als Rückschlagventile ausgebildeten Einlaß- und Auslaßventile 11 bzw. 12 am Hauptzylinder 1 den Förderverlauf beeinflussen. Diese Einflüsse können jedoch bei Bedarf durch eine elektronische Regelung ausgeglichen werden, wie sie in der DE-PS 30 35 770 beschrieben ist. Die dieser Druckschrift zu entnehmende technische Lehre läßt sich bei der Flüssigkeitspumpe nach Fig. 1 in vollem Umfang anwenden. Zu diesem Zweck weist die in Fig. 1 dargestellte Ausführungsform am Ausgang 22 des Hilfszylinders einen Drucksensor 71 auf. Die Ausgangssignale dieses Drucksensors 71 werden einer Regeleinrichtung 7 zugeführt, die in Abhängigkeit von den festgestellten Drücken die Drehzahl des die Exzenter 14, 24 antreibenden Motors 3 so beeinflußt, daß durch eine Variation der Drehzahl der Exzenter während jeder ihrer Umdrehungen der vom Drucksensor 71 festgestellte Druck der geförderten Flüssigkeit im wesentlichen konstant bleibt. Weiterhin kann von dem Motor 3 oder einem damit verbundenen Sensor über eine Leitung 73 eine Rückmeldung über die Drehzahl des Motors erfolgen, die es gestattet, die mittlerer Drehzahl der Exzenter druckunabhängig konstant zu halten. Wegen Einzelheiten dieser Art der Regelung wird auf die DE-PS 30 35 770 verwiesen, so daß sich an dieser Stelle nähere Ausführungen hierzu erübrigen.

Die in Fig. 4 der Zeichnung dargestellte Ausführungsform der Erfindung unterscheidet sich von der Flüssigkeits-Kolbenpumpe nach Fig. 1 lediglich dadurch, daß zu dem Hauptzylinder 1 nicht nur förderseitig ein Hilfszylinder 2 in Reihe geschaltet ist, sondern auch das Eingangsventil 11 über eine Leitung 8 mit einem weiteren Hilfszylinder 9 verbunden ist, der demgemäß zu dem Hauptzylinder 1 saugseitig in Reihe geschaltet ist. Der Kolben 93 dieses weiteren Hilfszylinders 9 wird von einem dritten Exzenter 94 angetrieben, der die gleiche Kontur hat wie der zweite Exzenter 24, jedoch so eingebaut ist, daß das durch den Kurvenabschnitt 6 in Fig. 3 wiedergegebene konstante Förderverhalten während der Saugphase des weiteren Hilfszylinders 9 eintritt, die ihrerseits während der Förderphase des Hauptzylinders 1 stattfindet, während die Kurve 16 der Saugphase des Hauptzylinders 1 enspricht und sich der weitere Hilfszylinder 9 im Bereich zwischen 0 und 180° nach Fig. 3 in der Förderphase befindet. Dieses Verhalten läßt sich durch eine Drehung des zweiten Exzenters 24 um 180° und eine solche Spiegelung erreichen, daß der dritte Exzenter 94 in entgegengesetzter Richtung abrollt. Die oben beschriebene elektronische Regelung kann

5

auch bei der Ausführungsform nach Fig. 4 Anwendung finden und fördert dann gleichzeitig die Konstanz des von der Kolbenpumpe angesaugten Flüssigkeitsstromes.

Ein konstantes Saugverhalten ist insbesondere dann von Bedeutung, wenn die Kolbenpumpe in der Hochdruck-Flüssigkeitschromatographie Anwendung finden soll, bei der Lösungsmittel mit zeitlich programmierbar wechselnden Zusammensetzungen gefördert werden müssen. Eine dabei häufig angewendete Technik der Lösungsmittelmischung besteht darin, die zu fördernde Flüssigkeit aus verschiedenen Vorratsgefäßen mittels Magnetventilen zeitlich gesteuert der Pumpe zuzuführen. Ein konstantes Ansaugverhalten ist dann die Voraussetzung dafür, daß zwischen der Ventilöffnungszeit und der geförderten Menge der jeweiligen Komponente eine lineare Beziehung besteht.

Es versteht sich, daß die Erfindung nicht auf die dargestellten Ausführungsbeispiele beschränkt ist. Insbesondere lassen sich die einzelnen Komponenten einer solchen Flüssigkeits-Kolbenpumpe in vielfältiger Hinsicht variieren. Auch ist bei Ausführungsformen, für die geringere Ansprüche an die Konstanz des Förder-und ggf. Saugverhaltens gestellt werden, die elektronische Regelung entbehrlich. Es ist auch denkbar, dem zweiten und gegebenenfalls dritten Exzenter eine einfachere Form zu geben, wenn geringere Anforderungen an die Impulsfreiheit des Flüssigkeitsstromes gestellt werden. Es sind unterschiedliche Näherungen an die theoretisch exakte Form dieser Exzenter denkbar, die solchen Ansprüchen genügen.

**Ansprüche**

1. Flüssigkeits-Kolbenpumpe zum Erzeugen eines Flüssigkeitsstromes für chromatographische Analysengeräte mit einem Hauptzylinder, der ein Einlaß- und ein Auslaßventil und einen von einem ersten Exzenter angetriebenen ersten Kolben aufweist, mit einem förderseitig zum Hauptzylinder in Reihe geschalteten, ventillosen Hilfszylinder, der einen von einem zweiten Exzenter angetriebenen zweiten Kolben aufweist, dessen Hubvolumen halb so groß ist wie das Hubvolumen des ersten Kolbens und dessen Arbeitstakt gegenüber dem Arbeitstakt des ersten Kolbens um $180°$ phasenverschoben ist, so daß der Hilfszylinder während der Förderphase des Hauptzylinders einen Teil der geförderten Flüssigkeit aufnimmt und während der Saugphase des Hauptzylinders den aufgenommenen Teil der Flüssigkeit wieder abgibt und dadurch der Pulsation des geförderten Flüssigkeitsstromes entgegenwirkt, und mit einer gemeinsamen Antriebsvorrichtung für die beiden Exzenter,
dadurch gekennzeichnet, daß
bei kreisförmiger Kontur des ersten Exzenters (14) der zweite Exzenter (24) eine von von der Kreisform abweichende Kontur aufweist, derart, daß der Saughub des zweiten Kolbens (23) sich über einen Drehwinkel des zweiten Exzenters (23) von weniger als $180°$ erstreckt und infolgedessen der Hilfszylinder (2) auch während des Förderhubes des ersten Kolbens (13) Flüssigkeit abgibt, wenn die Förderleistung des Hauptzylinders (1) wegen der Annäherung des ersten Kolbens (13) an seine Totpunkte schon erheblich vermindert ist, und daß die Förderleistung des Hilfszylinders (2) während des Saughubes des Hauptzylinders (1) wenigstens annähernd konstant ist.

2. Kolbenpumpe nach Anspruch 1, dadurch gekennzeichnet, daß die Kontur des zweiten Exzenters (24) durch die folgenden Beziehungen bestimmt ist:

$r_K = E \left( \frac{\beta}{\pi} + \cos \beta \right) - \sqrt{R_H^2 - E^2 \sin^2 \beta} + r_1$ für $0 \leq \beta \leq 180°$ und

$r_k = E \left( \frac{\beta}{\pi} - 1 \right) - R_H + r_1$ für $180° \leq \beta \leq 360°$,

mit

$r_1$ = Radius des ersten Exzenters (14),

$r_2$ = Radius einer am ersten Exzenter (14) anliegenden, am Ende des ersten Kolbens (13) gelagerten Rolle (15),

$R_H = r_1 + r_2$,

E = Abstand des Drehpunktes (P$_2$) des ersten Exzenters (14) vom Kreismittelpunkt (P$_1$),

$\beta$ = Winkel zwischen der den Drehpunkt (P$_2$) des ersten Exzenters (14) mit dem Mittelpunkt (P$_3$) der am Exzenter (14) anliegenden Rolle (15) verbindenden Linie (r$_h$) und dem den Mittelpunkt (P$_1$) dieses Exzenters (14) mit dessen Drehpunkt (P$_2$) verbindenden Radius (16) und

$r_k$ = Abstand des Mittelpunktes einer am zweiten Exzenter (24) anliegenden, am Ende des zweiten Kolbens (23) gelagerten Rolle (25) vom Drehpunkt des zweiten Exzenters (24).

3. Kolbenpumpe nach Anspruch 1 oder 2, dadurch gekennzeichnet, daß zu dem Hauptzylinder (1) auch saugseitig ein ventilloser Hilfszylinder (9) in Reihe geschaltet ist, der einen von einem dritten Exzenter (94) angetriebenen dritten Kolben (93) aufweist, welcher dritte Exzenter (94) sich aus dem zweiten Exzenter (24) durch eine Drehung um $180°$ und Spiegelung ergibt.

4. Kolbenpumpe nach einem der vorhergehenden Ansprüche, dadurch gekennzeichnet, daß die Antriebsvorrichtung für die Exzenter (14, 24) eine auf den Druck der geförderten Flüssigkeit ansprechende Regeleinrichtung (7) aufweist, die eine solche Variation der Drehzahl der Exzenter während jeder ihrer Umdrehungen bewirkt, daß der Druck der geförderten Flüssigkeit während jeder Umdrehung wenigstens annähernd konstant bleibt.

5. Kolbenpumpe nach Anspruch 4, dadurch gekennzeichnet. daß die Regeleinrichtung (7) druckunabhängige Mittel zum Überwachen und Konstanthalten der mittleren Drehzahl der Exzenter (14, 24) umfaßt.

Fig.1

Fig. 2

Fig. 3

Fig. 4